# EUROPEAN PATENT APPLICATION

(11) **EP 4 699 501 A1**
(43) Date of publication of application: **25.02.2026**
(21) Application number: 24791993.9
(22) Date of filing: 16.04.2024
(51) Int. Cl.: A47J 43/07

(54) **CUTTER ASSEMBLY, CUP BODY ASSEMBLY AND FOOD PROCESSOR**

(30) Priority: 18.04.2023 CN 202320871116 U; 19.05.2023 CN 202321238346 U; 19.05.2023 CN 202321238456 U; 19.05.2023 CN 202321238401 U
(71) Applicant: Guangdong Midea Consumer Electric Manufacturing Co., Ltd., Foshan, Guangdong 528311 (CN)
(72) Inventor: ZHAO, Hang, Foshan, Guangdong 528311 (CN); CHEN, Shengqu, Foshan, Guangdong 528311 (CN); WANG, Binbin, Foshan, Guangdong 528311 (CN); YANG, Jinfeng, Foshan, Guangdong 528311 (CN)
(74) Representative: RGTH
(86) International application number: PCT/CN2024/088024
(87) International publication number: WO 2024/217408

(57) **Abstract**

The present invention relates to the field of household appliances. Provided are a cutter assembly, a cup body assembly and a food processor. The cutter assembly comprises a cutter shaft and cutters, the cutter shaft being provided with a first end and a second end which are provided opposite to each other, the first end being suitable for being mounted on a drive member, and the second end being a free end. In the axial direction of the cutter shaft, at least three groups of cutters are provided at the cutter shaft, and a preset distance is set between every two adjacent groups of cutters. In the present invention, by means of setting the preset distance between every two adjacent groups of cutters, the cutter assembly has a larger crushing space in the cup body assembly, thus making crushed food finer, also having a good crushing effect especially for food without liquid, and effectively solving the problem of poor food crushing effect.

## Description

### CROSS-REFERENCES TO RELATED APPLICATIONS

The present invention claims priority to Chinese patent application No. 202320871116.7 filed on April 18, 2023, entitled "Cutter Assembly, Cup Body Assembly and Food Processor", Chinese patent application No. 202321238346.6 filed on May 19, 2023, entitled "Cutter Assembly, Cup body Assembly and Food Processor", Chinese patent application No. 202321238456.2 filed on May 19, 2023, entitled "Cutter Assembly, Cup body Assembly and Food Processor", and Chinese patent application No. 202321238401.1 filed on May 19, 2023, entitled "Cutter Assembly, Cup body Assembly and Food Processor", which are hereby incorporated by reference in their entireties.

### FIELD

The present invention relates to the field of household electrical appliances, and in particular to a cutter assembly, a cup body assembly, and a food processor.

### BACKGROUND

With improvement of people's living standards, various types of food processors have entered millions of households. A food processor is a machine capable of processing foods like fruits and vegetables into paste-like ingredients.

The food processor has functions such as grinding soy milk, squeezing juice, making rice paste, mincing meat, shaving ice, brewing coffee and/or preparing facial masks. A main component for realizing these functions is a cutter assembly configured to separate, cut or grind food under action of a driving force. To improve crushing effect of the cutter assembly, a multi-layer cutter arrangement is usually adopted for the cutter assembly.

However, in the related art, when the multi-layer cutter arrangement is adopted for the cutter assembly, multi-layer cutters are stacked in sequence, and the crushing space of the cutter assembly in a cup body is smaller, resulting in poor food crushing effect, and a defect of difficulty in crushing especially for food without addition of liquid .

### BRIEF SUMMARY

The present invention aims to solve at least one of problems in the related art. The present invention provides a cutter assembly that provides a larger crushing space, resulting in finer food crushing, particularly has very effective crushing of food without addition of liquid, and effectively solves the problem of poor food crushing effect.

The present invention further provides a cup body assembly.

The present invention further provides a food processor.

According to the present invention, a cutter assembly is provided, comprising:
a cutter shaft having a first end and a second end provided opposite to each other, where the first end is able to be mounted to a drive member, and the second end is a free end; and
cutters, where at least three groups of the cutters are provided at the cutter shaft along an axial direction of the cutter shaft, and a preset distance is provided between two adjacent groups of the cutters.

According to the cutter assembly provided in the present invention, a preset distance is set between two adjacent groups of the cutters, and the cutter assembly provides a larger crushing space in a cup body assembly, resulting in finer food crushing, particularly has very effective crushing of food without addition of liquid, and effectively solves the problem of poor food crushing effect.

According to an embodiment of the present invention, for blades of the cutter located in a middle, at least two of the blades are asymmetrically provided relative to the cutter shaft.

According to an embodiment of the present invention, for the blades of cutter located in the middle, among at least two of the blades asymmetrically provided relative to the cutter shaft:
at least one of the blades is bent downward to form an angle of 0° to 30° with a horizontal plane; and
at least one of the blades is provided parallel to the horizontal plane.

According to an embodiment of the present invention, at least two of the blades asymmetrically provided relative to the cutter shaft are provided with saw-tooth edges.

According to an embodiment of the present invention, each of the saw-tooth edges comprises a plurality of arc-shaped segments connected end to end. Each of the arc-shaped segments comprises a plurality of edge portions provided in an "S" shape and connected end to end.

According to an embodiment of the present invention, for the blades of the cutter located in the middle, at least two of the blades are symmetrically provided along an axis of the cutter shaft.

According to an embodiment of the present invention, for the blades of the cutter located in the middle, at least two of the blades symmetrically provided are bent upward to form an angle of 45° to 80° with a horizontal plane.

According to an embodiment of the present invention, for blades of the cutter located in a middle, the blades are provided with saw-tooth edges, and at least one of the blades is bent upward and at least one of the blades is bent downward.

According to an embodiment of the present invention, for the blades of the cutter located in the middle:
at least one of the blades is bent upward to form an angle of 0° to 30° with a horizontal plane; and
at least one of the blades is bent downward to form an angle of 0° to 30° with the horizontal plane.

According to an embodiment of the present invention, for the blades of the cutter located in the middle, the saw-tooth edges of the blades comprises a plurality of edge portions provided in an "S" shape, and connected end to end.

According to an embodiment of the present invention, in a radial direction of the cutter shaft, a distance from a farthest end of the cutter located at a lower part to an axis of cutter shaft is greater than a distance from a farthest end of the cutter located at an upper part to the axis of cutter shaft.

According to an embodiment of the present invention, a distance from a farthest end of each group of cutters to the axis of the cutter shaft gradually decreases from the first end of the cutter shaft to the second end of the cutter shaft.

According to an embodiment of the present invention, for blades of the cutter located in a middle:
at least one of the blades is bent downward to form an angle of 0° to 30° with a horizontal plane; and/or
at least two of the blades are bent upward to form an angle of 45° to 80° with a horizontal plane; and/or
at least one of the blades is provided parallel to a horizontal plane.

According to an embodiment of the present invention, a number of blades of the cutter located in a middle is greater than a number of blades of the cutters located on both sides thereof, or
a number of blades of each group of the cutters decreases from the first end of the cutter shaft to the second end of the cutter shaft.

According to an embodiment of the present invention, blades of two adjacent groups of cutters are staggered along a same rotation direction.

According to an embodiment of the present invention, angles between the blades of the cutter located in the middle and blades of the cutters located at both ends along an extension direction of the cutter shaft are 0° to 45°.

According to an embodiment of the present invention, for blades of the cutter located at a lower part, cutting edges of the blades face downward;
for blades of the cutter located in a middle, a cutting edge of at least one of the blades faces upward, and a cutting edge of at least one of the blades faces downward; and
for blades of the cutter located at a lower part, cutting edges of the blades face downward.

According to an embodiment of the present invention, for blades of the cutter located at a bottom:
at least two of the blades are bent upward to form an angle of 0° to 80° with a horizontal plane;
at least two of the blades are provided in sections, where each of the blades comprises a first blade portion and a second blade portion connected to each other, the first blade portion is connected to a root of the cutter located at the bottom, and the second blade portion is suspended;
the first blade portion is bent downward to form an angle of 60° to 80° with a horizontal plane; and
the second blade portion is bent upward to form an angle of 0° to 90° with a horizontal plane.

According to an embodiment of the present invention, a cutter holder is provided at the first end of the cutter shaft, and for the blades of the cutter located at a bottom;
an angle of 25° to 60° is formed between the first blade portion and a side wall of the cutter holder; and
an angle of 45° to 70° is formed between the second blade portion and the side wall of the cutter holder.

According to an embodiment of the present invention, for blades of the cutter located at an upper part, each of the blades is obliquely bent upward to form an angle of 0° to 90° with a horizontal plane; and/or
the preset distance between two adjacent groups of the cutters is 5 mm to 20 mm.

According to an embodiment of the present invention, a number of blades of the cutter located in a middle is four, a number of blades of the cutter located at an upper part is two, and a number of blades of the cutter located at a lower part is two; and/or
a number of blades of the cutter located in a middle is two, a number of blades of the cutter located at a lower part is two or four, and a number of blades of the cutter located at an upper part is two.

The present invention further provides a cup body assembly, comprising a cup body, a cup holder and a cutter assembly mentioned at an upper part, where the cup body is provided at the cup holder, and the cutter assembly is provided at the cup holder and extends into the cup body.

According to an embodiment of the present invention, an inner bottom wall of the cup body comprises a horizontal segment and an arc segment provided around the horizontal segment.

According to an embodiment of the present invention, an angle of 100° to 145° is formed between a side wall of the cutter holder of the cutter assembly and a tangent surface of the inner bottom wall of the cup body.

According to an embodiment of the present invention, a gap between the cutter located at a bottom and a side wall of the cup body at the corresponding position is 2 mm to 10 mm; and a gap between the cutter located at a bottom and an inner bottom wall of the cup body is 2 mm to 10 mm; and/or
a distance between the cutter located at a top and a cup opening of the cup body is 110 mm to 180 mm.

The present invention further provides a food processor, comprising a holder assembly and the cutter assembly mentioned above or the cup body assembly mentioned above;
where the cup body assembly is provided at the holder assembly.

Additional aspects and advantages of the present invention will be partially set forth in the following description some of which will be apparent from the following description, or may be learned by practice of the present invention.

### BRIEF DESCRIPTION OF THE DRAWINGS

To more clearly illustrate solutions in the embodiments of the present invention or the related art, the drawings that need to be used in the descriptions of the embodiments or the related art will be briefly described at a lower part. The drawings in the following description are only certain embodiments of the present invention, and for those skilled in the related art, other drawings may be obtained based on these drawings without any creative work.
FIG. 1 is a front view of an embodiment of a cutter assembly of the present invention;
FIG. 2 is a top view of an embodiment of a cutter assembly of the present invention;
FIG. 3 is a cross-sectional view of an embodiment of a cup body assembly of the present invention;
FIG. 4 is a partial enlarged view of point A in FIG. 3;
FIG. 5 is a partial enlarged view of point B in FIG. 3;
FIG. 6 is a top view of a cup body assembly of the present invention;
FIG. 7 is a front view of another embodiment of a cutter assembly of the present invention;
FIG. 8 is a top view of another embodiment of a cutter assembly of the present invention;
FIG. 9 is a cross-sectional view of another embodiment of a cup body assembly of the present invention;
FIG. 10 is a partial enlarged view of point A in FIG. 9;
FIG. 11 is a partial enlarged view of point B in FIG. 9;
FIG. 12 is a top view of another embodiment of a cup body assembly of the present invention.

### Reference signs

1000: cup body assembly;
100: cutter assembly;
10: cutter shaft; 11: first end; 12: second end; 13: cutter holder; 14: first fastener; 15: shaft sleeve; 16: second fastener; 17: shaft seal ring;
20: cutter;
21: first cutter; 211: first blade A; 212: second blade A;
22: second cutter; 221: first blade B; 2211: saw-tooth edge; 2211a: edge portion; 2211b: arc-shaped segment; 222: second blade B; 223: third blade B; 224: fourth blade B;
23: third cutter; 231: first blade C; 2311: first blade portion; 2321: second blade portion; 232: second blade C; 233: third blade C; 234: fourth blade C;
200: cup body; 210: arc segment; 220: horizontal segment;
300: cup holder.

### DETAILED DESCRIPTION

Embodiments of the present invention are further described in detail at a lower part with reference to the drawings and embodiments. The following embodiments are intended to illustrate the present invention, but are not intended to limit the scope of the present invention.

In the description of the embodiments of the present invention, it should be noted that orientation or positional relationships indicated by the terms such as "center", "longitudinal", "lateral", "upper", "lower", "front", "back", "left", "right", "vertical", "horizontal", "top", "bottom", "inside", and "outside", are based on the orientation or positional relationship shown in the drawings, and are merely for the convenience of describing the embodiments of the present invention and simplifying the description, rather than indicating or implying that the device or component stated must have a particular orientation, or be constructed and operated in a particular orientation, and thus cannot be understood as limitation to the embodiments of the present invention. Furthermore, the terms "first", "second", "third" are only used for descriptive purposes and should not be construed as indicating or implying a relative importance.

In the description of embodiments of the present invention, it should be noted that, unless otherwise explicitly specified and defined, the terms "connected to" and "connected" shall be understood broadly, for example, it may refer to a fixed connection, a detachable connection, or an integrated connection; it may refer to a mechanical connection or an electric connection; or it may refer to a direct connection or an indirect connection via an intermediate medium. The specific meanings of the terms above in embodiments of the present invention may be understood by those skilled in the art in accordance with specific circumstances.

In the embodiments of the present invention, unless otherwise clearly stated and defined, the first feature being located "on" or "under" the second feature may mean that the first feature is in direct contact with the second feature or the first feature is in indirect contact with the second feature by an intermediate medium. In addition, the first feature being "on," "above" and "over" the second feature may refer to that the first feature is directly above or obliquely above the second feature, or simply refer to that the level of the first feature is higher than that of the second feature. The first feature being "under", "below" and "beneath" the second feature may refer to that the first feature is directly below or obliquely below the second feature, or simply refer to that the level of the first feature is lower than that of the second feature.

In the description of the present specification, the description with reference to the terms "one embodiment," "some embodiments," "an example," "specific example," "some examples" and the like, refers to that specific features, structures, materials or characteristics described in combination with an embodiment or an example are comprised in at least one embodiment or example of the embodiments of the present invention. In the present specification, the schematic expressions of the above terms are not necessarily directed to the same embodiment or example. Furthermore, the particular features, structures, materials or characteristics described may be combined in any suitable manner in any one or more embodiments or examples. In addition, those skilled in the art may combine different embodiments or examples described in this specification, as well as the features of different embodiments or examples, without conflicting each other.

The present invention provides a cutter assembly, a cup body assembly and a food processor to increase a crushing space of the cutter assembly within the cup body, the crushed food can be finer, especially can have good crushing effect on food without addition of liquid, effectively solves a problem of poor food crushing effect. It should be noted that the cutter assembly provided in the present invention can be used in any food processor, which can be a juicer, a wall breaker, a juicer, a soy milk maker, or any other equipment used for processing food materials.

Specific structures of the cutter assembly, cup body assembly, and food processor of the present invention are described below.

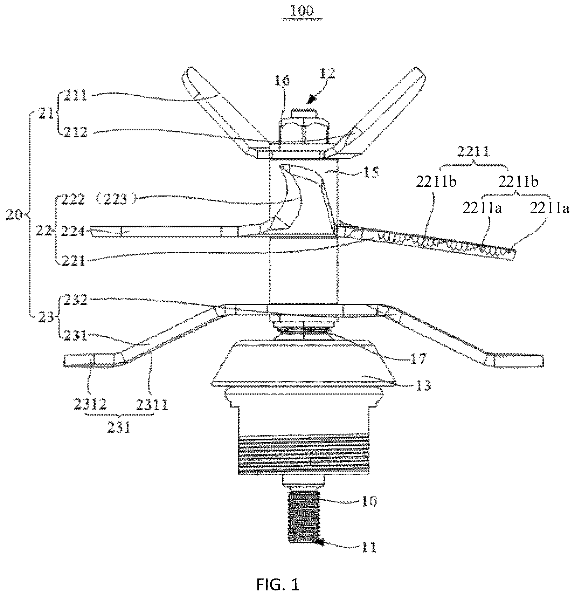

Referring to FIG. 1 to FIG. 3, in an embodiment of the cutter assembly 100 of the present invention, the cutter assembly 100 comprises a cutter shaft 10 and cutters 20. The cutter shaft 10 has a first end 11 and a second end 12 provided opposite to each other, the first end 11 is operable to be mounted to a drive member, and the second end 12 is a free end. Along an axial direction of the cutter shaft 10, at least three groups of the cutters 20 are provided at the cutter shaft 10, and a preset distance is provided between two adjacent groups of the cutters 20.

It can be understood that in the cutter assembly 100 provided in the present invention, at least three groups of cutters 20 are provided at the cutter shaft 10 along the axial direction of the cutter shaft 10, and a preset distance is provided between two adjacent groups of cutters 20, the cutter assembly 100 can provide a larger crushing space within the cup body assembly 1000. This can make the crushed food more finer, have a good crushing effect especially on food without addition of liquid, and effectively solves the problem of poor food crushing effect.

According to an embodiment of the present invention, for blades of the cutter 20 located in the middle, at least two of the blades are asymmetrically provided relative to the cutter shaft 10. By asymmetrically providing at least two of the blades of the cutter 20 located in the middle relative to the cutter shaft 10, a circumferential flow effect is achieved, thereby further making the crushed food finer.

In some embodiments, the cutter shaft 10 has a first end 11 and a second end 12 provided opposite to each other. The first end 11 is operable to be mounted a drive member, and the second end 12 is a free end. Along the axial direction of the cutter shaft 10, three groups of cutters 20 can be provided at the cutter shaft 10. The three groups of cutters 20 may be respectively a first cutter 21, a second cutter 22 and a third cutter 23, and the first cutter 21, the second cutter 22 and the third cutter 23 may be provided at intervals along the second end 12 of the cutter shaft 10 to the first end 11 of the cutter shaft 10.

The first cutter 21, the second cutter 22 and the third cutter 23 are mounted at the cutter shaft 10 at preset intervals through a shaft sleeve 15, respectively. The third cutter 23 is located at a bottom of the cutter shaft 10, that is, the third cutter 23 is the bottom cutter 20 and is provided close to the first end 11 of the cutter shaft 10. After the third cutter 23 is mounted at the cutter shaft 10, a first shaft sleeve 15 sleeves at the cutter shaft 10, and then the second cutter 22 is then mounted at the cutter shaft 10 and located at an upper part the first shaft sleeve 15, and the second cutter 22 and the third cutter 23 are spaced apart at a preset interval by the first shaft sleeve 15. A second shaft sleeve 15 sleeves at the cutter shaft 10, and the first cutter 21 is mounted at the shaft sleeve 15, and the first cutter 21 and the second cutter 22 are spaced apart at a preset interval by the second shaft sleeve 15. The first cutter 21 is finally locked by a second fastener 16 at the top end of the cutter shaft 10, in other words the second end 12 of the cutter shaft 10, to completely mount the entire cutter assembly 100, wherein the second fastener may be a nut.

Also, a cutter holder 13 may be mounted at the first end 11 of the cutter shaft 10, a gasket may be mounted between the second fastener 16 and the first cutter 21 to prevent loosening, and a gasket may also be mounted between the third cutter 23 and the cutter holder 13 to prevent loosening. A shaft seal ring 17 may also be mounted between the third cutter 23 and the cutter holder 13 to increase sealing.

Specifically, referring to FIG. 1, the second cutter 22 located in the middle may comprise four blades, namely a first blade B 221, a second blade B 222, a third blade B and a fourth blade B. The first blade B 221 and the fourth blade B are asymmetrical to each other, and both the first blade B 221 and the fourth blade B are provided with saw-tooth edges 2211.

Furthermore, referring to FIG. 1 to FIG. 3, in an embodiment of the cutter assembly 100 of the present invention, among the blades of the cutter 20 located in the middle, at least two of the blades are asymmetrically provided relative to the cutter shaft 10: at least one of the blades is bent downward to form an angle of 0° to 30° with a horizontal plane, that is, the first blade B 221 of the second cutter 22 located in the middle is bent downward to form an angle of 0° to 30° with the horizontal plane; and at least one of the blades is provided parallel to the horizontal plane, that is, the fourth blade B of the second cutter 22 located in the middle is provided parallel to the horizontal plane. For example, the angle γ1 formed by the first blade B 221 with the horizontal plane can be 5°, 8°, 10°, 15°, 25°, 30°, etc.

Such an arrangement allows the second cutter 22 located in the middle to form a larger stirring volume during the rotation process to fully stir different parts of the food, making the crushed food finer and providing a better crushing effect.

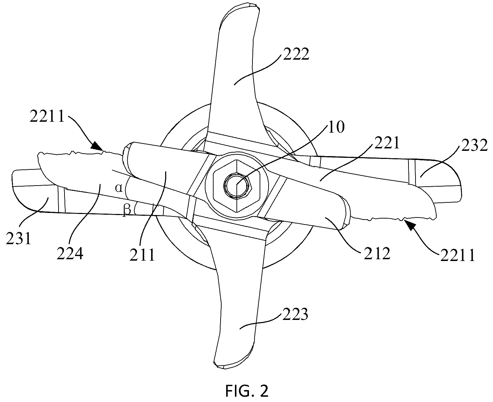

Furthermore, referring to FIG. 1 and FIG. 2, in an embodiment of the cutter assembly 100 of the present invention, at least two of the blades asymmetrically provided relative to the cutter shaft 10 are provided with saw-tooth edges 2211. That is, both the first blade B 221 and the fourth blade B of the second cutter 22 located in the middle are provided with saw-tooth edges 2211. In this way, during the process of stirring and crushing food, the cutter assembly 100 can improve the crushing effect of foods under action of the saw-tooth edges 2211, and the crushed food is finer to provide a better crushing effect.

Furthermore, referring to FIG. 1 and FIG. 2, in an embodiment of the cutter assembly 100 of the present invention, the saw-tooth edges 2211 of at least two of the blades asymmetrically provided relative to the cutter shaft 10 comprise a plurality of arc-shaped segments. The plurality of arc-shaped segments are connected end to end, each of the arc-shaped segments comprises a plurality of edge portions 2211a provided in an "S" shape, and connected end to end. Specifically, each of the first blade and the fourth blade B 224 of the second cutter 22 located in the middle comprises a plurality of arc-shaped segments. The plurality of arc-shaped segments are connected end to end, each of the arc-shaped segment comprises a plurality of edge portions 2211a provided in an "S" shape, and connected end to end.

With such an arrangement, the saw-tooth edges 2211 can fully crush the food and the crushed food is finer, and in particular, a good crushing effect may be provided for food without addition of liquid to further solve the problem of poor food crushing effect.

Furthermore, referring to FIG. 1 to FIG. 3, in an embodiment of the cutter assembly 100 of the present invention, for the blades of the cutter 20 located in the middle, at least two of the blades are symmetrically provided along an axis of the cutter shaft 10. Specifically, the second blade B 222 and the third blade B of the second cutter 22 located in the middle are symmetrically provided along the axis of the cutter shaft 10. By such an arrangement, the efficiency of the cutter assembly 100 in whipping and crushing food, as well as the crushing effect may be effectively improved.

Furthermore, referring to FIGs 1 to 3, in one embodiment of the cutter assembly 100 of the present invention, among the blades of the cutter 20 located in the middle, at least two of the symmetrically provided blades are bent upward and form an angle of 45° to 80° with the horizontal plane. That is, the angle γ2 formed by the second blade B 222 and the third blade B of the second cutter 22 located in the middle with the horizontal plane can be specifically 45°, 50°, 60°, 70°, 75°, 80°, etc.

With such an arrangement, s the second blade B 222 and the third blade B of the second cutter 22 located in the middle form a larger stirring volume during the rotation process to fully stir different parts of the food, making the crushed food finer and providing a better crushing effect.

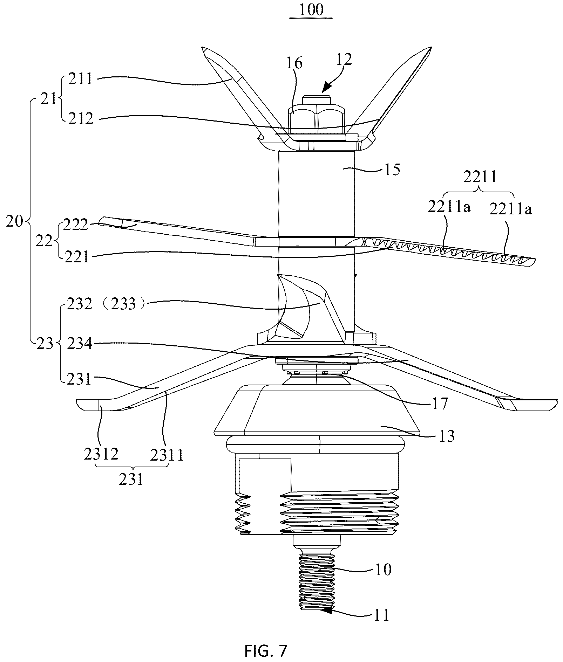

Referring to FIG. 7 to FIG. 9, in an embodiment of the cutter assembly 100 of the present invention, the blades of the cutter 20 located in the middle are provided with saw-tooth edges 2211, with at least one of the blades being bent upward and at least one of the blades being bent downward.

It can be understood that by providing saw-tooth edges 2211 at the blades of the cutter 20 located in the middle, and by bending at least one blade upward and at least one blade downward, the crushed food can be made finer, especially providing food without addition of liquid with a good crushing effect to effectively solve the problem of poor food crushing effect.

Specifically, referring to FIG. 7, the second cutter 22 located in the middle may comprise two blades, namely a first blade B 221 and a second blade B 222. The second blade B 222 bends upward, while the first blade B 221 bends downward.

Furthermore, referring to FIG. 7, in an embodiment of the cutter assembly 100 of the present invention, for the blades of the cutter 20 located in the middle: at least one of the blades is bent upward to form an angle of 0° to 30° with the horizontal plane, that is, the second blade B 222 of the second cutter 22 located in the middle is bent upward to form an angle of 0° to 30° with the horizontal plane. At least one of the blades is bent downward to form an angle of 0° to 30° with the horizontal plane, that is, the first blade B 221 of the second cutter 22 located in the middle is bent downward to form an angle of 0° to 30° with the horizontal plane. For example, the angle γ1 formed by the at least one of the blades being bent upward with the horizontal plane may be 5°, 8°, 10°, 15°, 25°, 30°, etc., and the angle γ2 formed by the at least one of the blades being bent downward with the horizontal plane may also be 5°, 8°, 10°, 15°, 25°, 30°, etc.

With such an arrangement, the first blade B 221 and the second blade B 222 of the second cutter 22 located in the middle form a larger stirring volume during rotation to fully stir different parts of the food, making the crushed food finer and providing a better crushing effect.

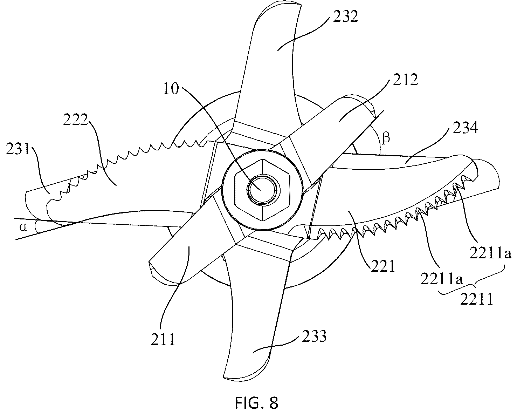

Furthermore, referring to FIG. 7 and FIG. 8, in an embodiment of the cutter assembly 100 of the present invention, for the blades of the cutter 20 located in the middle, each of the saw-tooth edges 2211 comprises a plurality of edge portions 2211a provided in an "S" shape and connected end to end. Specifically, the first blade B 221 and the second blade B 222 of the second cutter 22 located in the middle both comprise a plurality of edge portions 2211a provided in an "S" shape and connected end to end.

With the saw-tooth edges 2211 of such an arrangement, the food may be fully crushed the crushed food is finer, and in particular, a good crushing effect may be provided for food without addition of liquid to further solve the problem of poor food crushing effect.

Referring to FIG. 1 to FIG. 3, in an embodiment of the cutter assembly 100 of the present invention, in a radial direction of the cutter shaft 10, a distance from a farthest end of the cutter 20 located at a lower part to the axis of the cutter shaft 10 is greater than the distance from the farthest end of the cutter 20 located at an upper part to the axis of the cutter shaft 10.

It can be understood that by making the distance from the farthest end of the cutter 20 located at a lower part to the axis of the cutter shaft 10 greater than the distance from the farthest end of the cutter 20 located at an upper part to the axis of the cutter shaft 10 in the radial direction of the cutter shaft 10, the size of each group of cutters 20 can be differentiated, the crushed food can be finer, especially for food without addition of liquid, and a good crushing effect can also be provided to effectively solve the problem of poor food crushing effect.

It should be noted that the distance from the farthest end of the cutter 20 located at a lower part to the axis of the cutter shaft 10 is greater than the distance from the farthest end of the cutter 20 located at an upper part to the axis of the cutter shaft 10. Specifically, the distance from the farthest end of all cutters 20 at an upper part the lowest cutters 20 to the axis of the cutter shaft 10 is less than the distance from the farthest end of the lowest cutters 20 to the axis of the cutter shaft 10.

Furthermore, the at least two groups of cutter 20 located at an upper part the lowest cutters 20 may comprise the cutter 20 located in the middle and the cutter 20 located at an upper part. Specifically, the distance between the farthest end of the cutter 20 located in the middle and the axis of the cutter shaft 10 may be greater than, equal to, or less than the distance between the farthest end of the cutter 20 located at an upper part and the axis of the cutter shaft 10, as long as both the distance from the farthest end of the cutter 20 located in the middle to the axis of the cutter shaft 10 and the distance from the farthest end of the cutter 20 located at an upper part to the axis of the cutter shaft 10 are less than the distance from the farthest end of the cutter 20 located at a lower part to the axis of the cutter shaft 10.

Furthermore, referring to FIG. 1 to FIG. 3, in an embodiment of the cutter assembly 100 of the present invention, the distance from a farthest end of each group of the cutter 20 to the axis of the cutter shaft 10 gradually decreases from the first end 11 of the cutter shaft 10 to the second end 12 of the cutter shaft 10.

With such an arrangement, the size of each group of cutter 20 can be differentiated, the crushed food is finer, especially for food without liquid, and a better crushing effect can be provided to further solve the problem of poor food crushing effect.

Furthermore, referring to FIG. 1, in an embodiment of the cutter assembly 100 of the present invention, for the blades of the cutter 20 located in the middle: at least one of the blades is bent downward to form an angle of 0° to 30° with the horizontal plane; at least two of the blades are bent upward to form an angle of 45° to 80° with the horizontal plane; and at least one of the blades is provided parallel to the horizontal plane. For example, the angle γ1 formed by the at least one blade being bent downward with the horizontal plane may be 5°, 8°, 10°, 15°, 25°, 30°, etc.; and the angle γ2 formed by the at least two blades being bent upward with the horizontal plane may be 45°, 50°, 55°, 60°, 70°, 80°, etc. In this way, the blades of the cutter 20 located in the middle can form a larger whipping volume during rotation to fully stir different parts of the food, making the crushed food finer and providing a better crushing effect.

Specifically, referring to FIG. 1, the second cutter 22 located in the middle may comprise four blades, namely a first blade B 221, a second blade B 222, a third blade B and a fourth blade B. The first blade B 221 is bent downward to form an angle of 0° to 30° with the horizontal plane; both the second blade B 222 and the third blade B are bent upward to form an angle of 45° to 80° with the horizontal plane, and the second blade B 222 and the third blade B may be symmetrically provided along the axis of the cutter shaft 1010; and the fourth blade B is flush with the horizontal plane.

Referring to FIG. 1 and FIG. 7 jointly, in an embodiment of the cutter assembly 100 of the present invention, a number of blades of the cutter 20 located in the middle is greater than a number of blades of the cutters 20 located on both sides thereof, or a number of blades of each group of cutters 20 decreases from the first end 11 of the tool shaft 10 to the second end 12 of the cutter shaft 10.

It can be understood that the cutter assembly 100 provided in the present invention has the larger number of blades than the cutter 20 located on both sides thereof, or the number of blades of each group of cutters 20 decreases from the first end 11 of the cutter shaft 10 to the second end 12 of the cutter shaft 10. The number of blades of each group of cutters 20 is consequently set differently, the crushed food is finer, especially for food without liquid, a good crushing effect can also be provided to effectively solve the problem of poor food crushing effect.

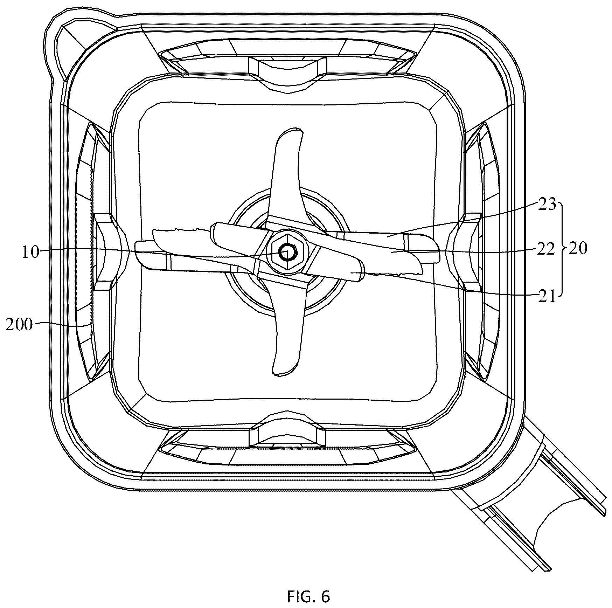

Referring to FIG. 1 to FIG. 6, in some embodiments of the present invention, when the number of blades of the cutter 20 located in the middle is greater than the number of blades of the cutter 20 located on both sides thereof, the two adjacent groups of cutters 20 are staggered along the same rotation direction. The cutter assembly 100 provided in this manner is suitable for a large-capacity cup body 200.

Specifically, referring to FIG. 1 and FIG. 2, the number of blades of the second cutter 22 is greater than the number of blades of the first cutter 21 and the third cutter 23. Along the same rotation direction, the blade of the second cutter 22 is staggered with the blade of the first cutter 21, and the blade of the third cutter 23 is staggered with the blade of the second cutter 22. That is, the blades of the first cutter 21, the second cutter 22 and the third cutter 23 are staggered in sequence. The parts of each layer of cutters 20 in contact with the food are consequently different, the food is crushed more finely and the crushing effect is better.

In some embodiments of the present invention, as shown in FIG. 2, in a same projection plane, the angle α between the blades of the second cutter 22 and the blades of the first cutter 21 is 0°~45°, and the angle β between the blades of the third cutter 23 and the blades of the second cutter 22 is 0°~45°, which can improve the crushing efficiency of the cutter assembly 100.

The same projection plane may be a horizontal projection from the first end 11 to the second end 12 along the axial direction of the cutter shaft 10 (as shown in FIG. 2), or may be a horizontal projection from the second end 12 to the first end 11 along the axial direction of the cutter shaft 10 (not shown in the figures). The same projection plane may also be a horizontal plane.

Furthermore, referring to FIG. 7 and FIG. 8, in an embodiment of the cutter assembly 100 of the present invention, for the blades of the cutter 20 located at a lower part, cutting edges of the blades face downward; for the blades of the cutter 20 located in the middle, a cutting edge of at least one blade faces upward, and a cutting edge of at least one blade faces downward; and for the blades of the cutter 20 located at a lower part, cutting edges of the blades face downward. That is, the cutting edge of the blade of the third cutter 23 located at a lower part faces downward; the cutting edge of the first blade B 221 of the second cutter 22 located in the middle faces upward, and the cutting edge of the second blade B 222 of the second cutter 22 located in the middle faces downward; the cutting edges of the blades of the first cutter 21 located at an upper part faces downward. In this way, the cutter assembly 100 can whip food within a larger volume, making the whipped food finer.

In other embodiments, the cutting edge of the second cutter 22 located in the middle may be set to face upward or downward at the same time.

In an embodiment, as shown in FIG. 7 and FIG. 8, the third cutter 23 comprises four blades, namely a first blade C 231, a second blade C 232, a third blade C 233 and a fourth blade C 234. The second blade C 232 and the third blade C 233 are bent upward to form an angle of 0° to 80° with the horizontal plane.

In an embodiment, both the first blade C 231 and the fourth blade C 234 comprise a first blade portion 2311 and a second blade portion 2321 (in the drawings, only the first blade portion 2311 and the second blade portion 2321 of the first blade C 231 are shown, but the first blade portion 2311 and the second blade portion 2321 of the fourth blade C 234 are not shown), the first blade portion 2311 is connected to a root of the cutter 20, and the second blade portion 2321 is a free end. The first blade portion 2311 is bent downward, and the angle between the first blade portion 2311 and the horizontal plane is 60° to 80°, while the second blade portion 2321 is bent upward, and the angle between the second blade portion 2321 and the horizontal plane is 0° to 90°.

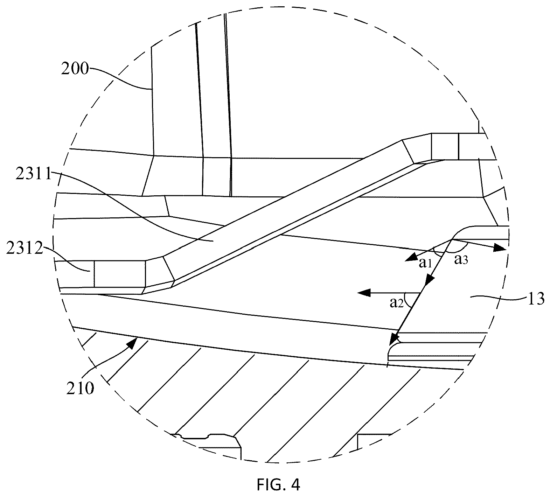

Further, referring to FIG. 1 and FIG. 4, in an embodiment of the cutter assembly 100 of the present invention, the first end 11 of the cutter shaft 10 is provided with a cutter holder 13. For the blades of the cutter 20 located at the bottom: an angle *a*1 of 25° to 60° is formed between the first blade portion 2311 and a side wall of the cutter holder 13, while an angle *a*2 of 45° to 70° is formed between the second blade portion 2321 and the side wall of the cutter holder 13. For example, the angle *a*1 between the first blade portion 2311 and the side wall of the cutter holder 13 may be 25°, 32°, 45°, 55°, 60°, etc., and the angle *a*2 between the second blade portion 2321 and the side wall of the cutter holder 13 may be 45°, 50°, 57°, 60°, 65°, 70°, etc. In this way, the blade of the third cutter 23 located at a lower part can form a larger stirring volume during rotation to fully stir different parts of the food, making the crushed food finer and achieving a better crushing effect.

In the present embodiment, during the assembly process, the first end 11 of the cutter shaft 10 of the cutter assembly 100 may be provided at the inner bottom wall of the cup body 200 through the cutter holder 13to assemble the cutter assembly 100 with the cup body 200.

Referring to FIG. 1 or FIG. 7, in some embodiments of the present invention, both the blades of the cutter 20 located at the top are bent upward to form an angle of 0° to 90° with the horizontal plane.

Specifically, the first cutter 21 comprises two blades, and each of the two blades is bent upward and forms an angle of 0° to 90° with the horizontal plane.

In some embodiments of the present invention, four groups of cutters 20 may be provided at the cutter shaft 10 along the axial direction of the cutter shaft 10, and the four groups of cutters 20 are respectively recorded as: a first cutter A5, a second cutter A6, a third cutter A7 and a fourth cutter A8 (not shown in the drawings).

The first cutter A5 has the same structure as the first cutter 21, the second cutter A6 has the same structure as the third cutter 23, and the third cutter A7 and the fourth cutter A8 have the same structure as the second cutter 22.

Furthermore, referring to FIG. 1 and FIG. 7, in an embodiment of the cutter assembly 100 of the present invention, the preset distance between two adjacent groups of the cutters 20 is 5 mm to 20 mm. For example, the preset distance between two adjacent groups of the cutters 20 may be 5 mm, 8 mm, 13 mm, 15 mm, 18 mm, 20 mm, etc.

With such an arrangement, the cutter assembly 100 may be ensured to have sufficient stirring space while preventing the preset distance between two adjacent groups of cutters 20 from being too long to affect stirring and crushing effects of the food.

In a specific embodiment, referring to FIG. 1 and FIG. 2, in an embodiment of the cutter assembly 100 of the present invention, the number of blades of the cutter 20 located in the middle is four, and numbers of blades of the cutter 20 located at the top and the bottom each are two;
along the same rotation direction, the blades of the two adjacent groups of cutters 20 are staggered;
the preset distance between two adjacent groups of the cutters 20 is from 5 mm to 20 mm;
cutting edges of the blades of the cutter 20 located at a lower part face upward, and both cutting edges of the blades of the cutter 20 located in the middle and cutting edges of the blades of the cutter 20 located at the top face downward;
for the cutter 20 located in the middle, the two blades are asymmetrically provided relative to the cutter shaft 10, and the two blades are symmetrically provided along the axis of the cutter shaft 10, forming a cross-shaped arrangement of the blades of the cutter 20 located in the middle. For the two asymmetrical blades, both blades are provided with saw-tooth edges 2211, one of the blades is bent downward to form an angle of 0° to 30° with the horizontal plane, while the other is provided parallel to the horizontal plane; the saw-tooth edge 2211 comprises a plurality of arc-shaped segments connected end to end, each of which comprises a plurality of edge portions 2211a provided in an "S" shape connected end to end; and the two symmetrically provided blades are bent upward to form an angle of 45° to 80° with the horizontal plane;
the blades of the cutters 2020 located at an upper part are bent upward to form an angle of 45° to 80° with the horizontal plane;
the blade of the cutter 20 located at a lower part comprises a first blade portion 2311 and a second blade portion 2321, wherein the first blade portion 2311 is connected to the root of the cutter 20, and the second blade portion 2321 is a free end; the first blade portion 2311 is bent downward to form an angle of 60° to 80° with the horizontal plane, while the second blade portion 2321 is bent upward to form an angle of 0° to 90° with the horizontal plane; the first end 11 of the cutter shaft 10 is provided with a cutter holder 13, the first blade portion 2311 forms an angle of 25° to 60° with the sidewall of the cutter holder 13, and the second blade portion 2321 forms an angle of 45° to 70° with the sidewall of the cutter holder 13; and
in the radial direction of the cutter shaft 10, the distance from the farthest end of the cutter 20 located at a lower part to the axis of the cutter shaft 10 is greater than the distance from the farthest end of the cutter 20 located at an upper part to the axis of the cutter shaft 10.

In another specific embodiment, referring to FIG. 7 and FIG. 8, in an embodiment of the cutter assembly 100 of the present invention, the number of blades of the cutter 20 located in the middle is two, the number of blades of the cutter 20 located at the bottom is two or four, and the number of blades of the cutter 20 located at the top is two;
along the same rotation direction, the blades of the two adjacent groups of cutters 20 are staggered;
the preset distance between two adjacent groups of the cutters 20 is from 5 mm to 20 mm;
for the blades of the cutter 20 located at a lower part, cutting edges of the blades face downward; for the blades of the cutter 20 located in the middle, a cutting edge of at least one blade faces upward, and a cutting edge of at least one blade faces downward; for the blades of the cutter 20 located at an upper part, the cutting edges of the blades face downward;
for the cutter 20 located in the middle, two of the blades are provided in an "S" shape, with one blade being bent upward and forming an angle of 0° to 30° with the horizontal plane, and the other blade being bent downward and forming an angle of 0° to 30° with the horizontal plane; the saw-tooth edge 2211 of the blade comprises a plurality of edge portions 2211a provided in an "S" shape, and the plurality of edge portions 2211a are connected end to end;
the blade of the cutter 20 located at an upper part is bent upward and forms an angle of 45° to 80° with the horizontal plane;
among the blades of the lowest cutters 20, two of the blades comprise a first blade portion 2311 and a second blade portion 2321, where the first blade portion 2311 is connected to the root of the cutters 20, and the second blade portion 2321 is a free end; the first blade portion 2311 is bent downward to form an angle of 60° to 80° with the horizontal plane, while the second blade portion 2321 is bent upward to form an angle of 0° to 90° with the horizontal plane; the first end 11 of the cutter shaft 10 is provided with a cutter holder 13, the first blade portion 2311 forms an angle of 25° to 60° with the side wall of the cutter holder 13, and the second blade portion 2321 forms an angle of 45° to 80° with the side wall of the cutter holder 13; and
in the radial direction of the cutter shaft 10, the distance from the farthest end of the cutter 20 located at a lower part to the axis of the cutter shaft 10 is greater than the distance from the farthest end of the cutter 20 located at an upper part to the axis of the cutter shaft 10.

In this way, the number, size, shape and other parameters of each group of cutter 20 may be set differently, the crushed food is finer and a good crushing effect can also be provided especially for food without addition of liquid.

In this embodiment, the comparison between the cutter assembly 100 provided in the present invention and the traditional cutter assembly 100 is experimentally carried out, when the cup body 200 has a capacity of 1 to 2 L, a motor speed is 10,000 to 25,000 RPM, a motor power is 800 to 2000 W, the cup bottom diameter is 95 mm to 140 mm, and the blade diameter is 40 to 93 mm, the theoretical comparison data of the cutter assembly 100 provided in the present invention and the traditional cutter assembly 100 are as follows: the cutter assembly 100 provided in the present invention can stir the liquid at a speed of 3.59 m/s, while the traditional cutter assembly 100 can only stir the liquid at a speed of 2.63 m/s, that is, the efficiency of stirring the liquid using the cutter assembly 100 provided in the present invention is higher than using the traditional cutter assembly 100 by 36.5%. Furthermore, the cutter assembly 100 provided in the present invention can crush food to a particle size of up to 1.05, while the traditional cutter assembly 100 can only crush food to a particle size of 1.13. Therefore, the food crushed by the cutter assembly 100 provided in the present invention is finer, and the cutter assembly 100 provided in the present invention is 7% more efficient in crushing food than the traditional cutter assembly 100.

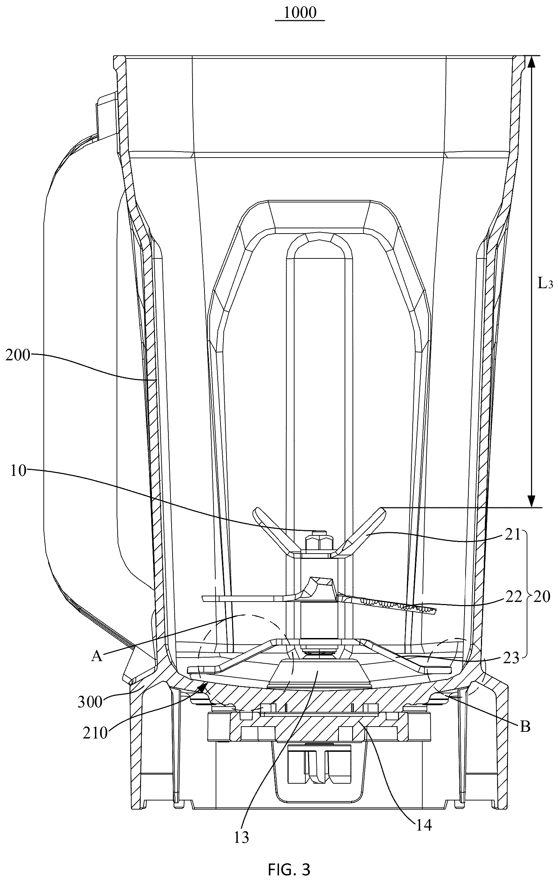

Referring to FIG. 3 to FIG. 6 and FIG. 9 to FIG. 12, the present invention further provides a cup body 200 group, the cup body assembly 1000 comprises a cup body 200, a cup holder 300 and the cutter assembly 100 as described above. The specific structure of the cutter assembly 100 is referred to the at an upper part embodiment. Since the present cup body assembly 1000 adopts all the solutions of all the above embodiments, it has at least all the beneficial effects brought about by the technical solutions of the above embodiments, which is not described in detail here. The cup body 200 is provided at the cup holder 300, and the cutter assembly 100 is provided at the cup holder 300 and extends into the cup body 200.

It can be understood that in the cup body assembly 1000 provided in the present invention, by providing the cutter assembly 100 at the cup holder 300 and extending into the cup body 200, the cutter assembly 100 can have a larger crushing space in the cup body assembly 1000, and the food crushed by the cutter assembly 100 in the cup body assembly 1000 can be made finer, and a good crushing effect can also be provided especially for food without liquid to effectively solve the problem of poor food crushing effect.

In the present embodiment, the first end 11 of the cutter shaft 10 of the cutter assembly 100 is provided at the inner bottom wall of the cup body 200 through the cutter holder 13, and the cutter shaft 10 is rotatably connected to the cutter holder 13. The cutter holder 13 is fixed to the inner bottom wall in the direction from the inner bottom wall to the outer wall of the cup body 200 through the first fastener 14, wherein the first fastener 14 may be a nut.

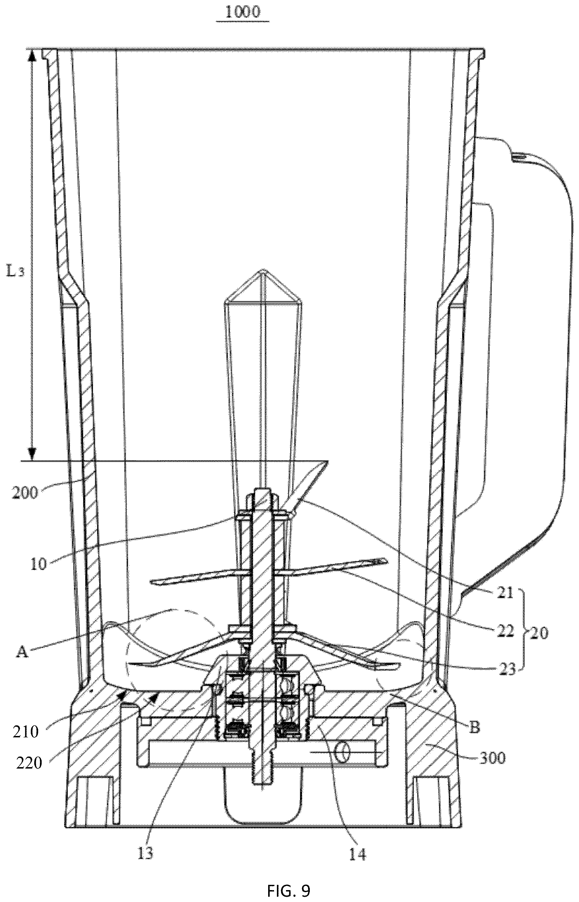

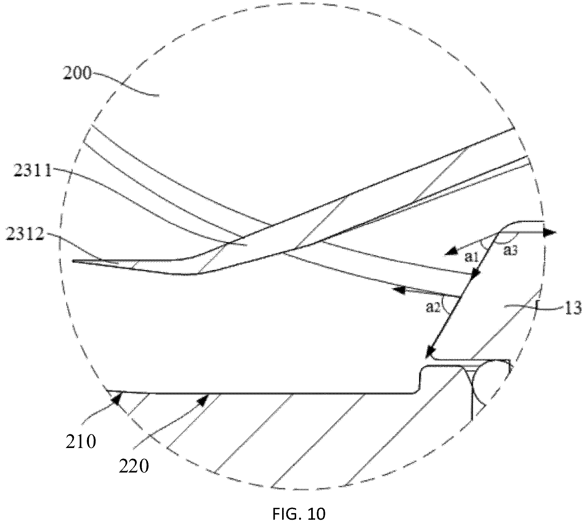

Furthermore, referring to FIG. 9 and FIG. 10, in an embodiment of the cup body assembly 1000 of the present invention, the inner bottom wall of the cup body 200 comprises a horizontal segment 220 and an arc segment 210 provided around the horizontal segment 220.

With such an arrangement, when the cutter assembly 100 stirs and crushes the food in the cup body 200, the food can quickly roll across the inner bottom wall provided by the horizontal segment 220 and the arc segment 210 to improve the stirring and crushing efficiency of the cutter assembly 100 on the food.

In other embodiments, referring to FIG. 3 and FIG. 4, the inner bottom wall of the cup body 200 is an arc segment 210.

With such an arrangement, when the cutter assembly 100 stirs and crushes the food in the cup body 200, the food can quickly roll across the inner bottom wall provided by the arc segment 210 to improve the stirring and crushing efficiency of the cutter assembly 100 on the food.

Furthermore, referring to FIG. 4 and FIG. 10, in an embodiment of the cup body assembly 1000 of the present invention, an angle *a*3 of 100° to 135° is formed between the side wall of the cutter holder 13 of the cutter assembly 100 and the tangent surface of the inner bottom wall of the cup body 200. For example, the angle *a*3 between the side wall of the cutter holder 13 and the tangent surface of the inner bottom wall of the cup body 200 may be 100°, 105°, 112°, 120°, 125°, 135°, etc. In this way, the efficiency and effect of the cutter assembly 100 in crushing food can be effectively improved.

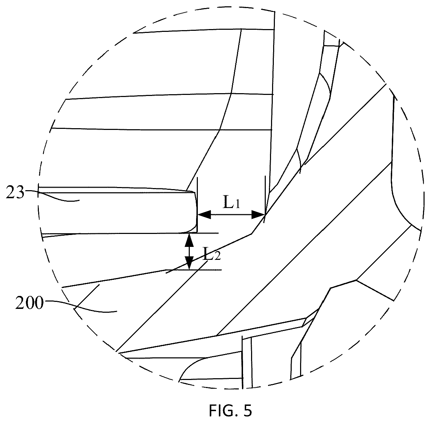

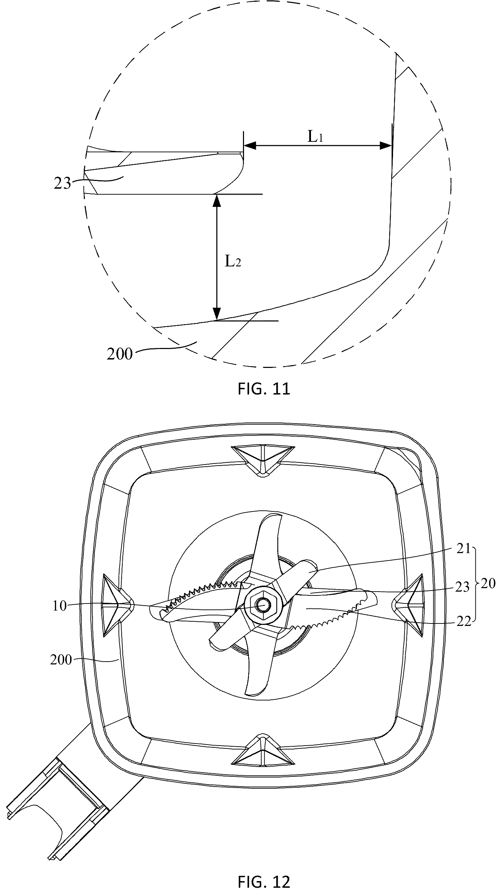

Further, referring to FIG. 5 and FIG. 11, in an embodiment of the cup body assembly 1000 of the present invention, a gap L1 between the cutter 20 located at the bottom and the side wall of the corresponding position of the cup body 200 is 2mm~10mm; a gap L2 between the cutter 20 located at the bottom and the inner bottom wall of the cup body 200 is 2mm~10mm. That is, the gap L1 between the two blades of the third cutter 23 located at the bottom and the side wall at the corresponding position of the cup body 200 is 2mm~10mm, and the gap L1 between the side wall and the position of the intersection with the plane where the third cutter 23 is located is 2mm~10mm, and the gap L2 between the two blades of the third cutter 23 and the inner bottom wall of the cup body 200 is 2mm~10mm.

For example, the gap L1 between the lowest third cutter 23 at the bottom and the side wall of the cup body 200 at the corresponding position may be 2mm, 5mm, 7mm, 8mm, 10mm, etc., and the gap L2 between the lowest third cutter 23 at the bottom and the inner bottom wall of the cup body 200 may also be 2mm, 5mm, 7mm, 8mm, 10mm, etc.

With such an arrangement, the cutter assembly 100 can be ensured to have sufficient stirring volume while improving the efficiency and effect of stirring and crushing food. When the gap between the third cutter 23 located at the bottom and the side wall of the cup body 200 at the corresponding position, or the gap between the third cutter 23 located at the bottom and the inner bottom wall of the cup body 200 is too small, this arrangement can conveniently prevent the collision of the blade on the third cutter 23 with the inner wall of the cup body 200. When the gap between the third cutter 23 located at the bottom and the side wall of the cup body 200 at the corresponding position, or the gap between the lowest third cutter 23 located at the bottom and the inner bottom wall of the cup body 200 is too large, this arrangement can prevent the large gap from affecting the efficiency and effect of whipping and crushing food.

Furthermore, referring to FIG. 3 and FIG. 9, in an embodiment of the cup body assembly 1000 of the present invention, the distance *L3* between the cutter 20 located at the bottom and the cup opening of the cup body 200 is from 110 mm to 180 mm. For example, the distance L3 between the topmost first cutter 21 and the cup opening of the cup body 200 may be 110 mm, 125 mm, 130 mm, 138 mm, 150 mm, 180 mm, etc.

With such an arrangement, the cutter assembly 100 can fully stir and crush the food in the cup body 200 to effectively improve the efficiency and effect of stirring and crushing the food.

The present invention further provides a food processor, which comprises a processor holder assembly and the cutter assembly 100 as described above or the cup body assembly 1000 as described above. For the specific structure of the cutter assembly 100 or the cup body assembly 1000, reference is made to the above embodiments. Since the present food processor adopts all the solutions of all the above embodiments, it has at least all the beneficial effects brought about by the technical solutions of the above embodiments, which will not be described in detail here. Wherein, the cup body assembly 1000 is provided at the processor holder assembly.

Finally, it should be noted that the above embodiments are only used to illustrate the present invention, but not to limit the present invention. Although the present invention has been described in detail with reference to the embodiments, those skilled in the art should understand that various combinations, modifications, or equivalent replacements of the solutions of the present invention do not depart from the scope of the solutions of the present invention, and should all be comprised in the scope of the claims of the present invention.

## Claims

1. A cutter assembly (100), comprising:
a cutter shaft (10) having a first end (11) and a second end (12) provided opposite to each other, wherein the first end (11) is able to be mounted on a drive member, and the second end (12) is a free end; and
cutters (20), wherein at least three groups of the cutters (20) are provided at the cutter shaft (10) along an axial direction of the cutter shaft (10), and a preset distance is provided between two adjacent groups of the cutters (20).

2. The cutter assembly (100) of claim 1, wherein, for blades of the cutter (20) located in a middle, at least two of the blades are asymmetrically provided relative to the cutter shaft (10).

3. The cutter assembly (100) of claim 2, wherein, for the blades of the cutter (20) located in the middle, among the at least two of the blades asymmetrically provided relative to the cutter shaft (10):
at least one of the blades is bent downward to form an angle of 0° to 30° with a horizontal plane; and
at least one of the blades is provided parallel to the horizontal plane.

4. The cutter assembly (100) of claim 2, wherein the at least two of the blades asymmetrically provided relative to the cutter shaft (10) are provided with saw-tooth edges (2211).

5. The cutter assembly (100) of claim 4, wherein each of the saw-tooth edges (2211) comprises a plurality of arc segments connected end to end, and each of the arc segments comprises a plurality of edge portions (2211a) provided in an "S" shape and connected end to end.

6. The cutter assembly (100) of claim 2, wherein, for the blades of the cutter (20) located in the middle, at least two of the blades are symmetrically provided along an axis of the cutter shaft (10).

7. The cutter assembly (100) of claim 6, wherein, for the blades of the cutter (20) located in the middle, the at least two of the blades symmetrically provided are bent upward to form an angle of 45° to 80° with the horizontal plane.

8. The cutter assembly (100) of claim 1, wherein, for blades of the cutter (20) located in a middle, the blades are provided with saw-tooth edges (2211), and at least one of the blades is bent upward and at least one of the blades is bent downward.

9. The cutter assembly (100) of claim 8, wherein, for the blades of the cutter (20) located in the middle:
at least one of the blades is bent upward to form an angle of 0° to 30° with a horizontal plane; and
at least one of the blades is bent downward to form an angle of 0° to 30° with the horizontal plane.

10. The cutter assembly (100) of claim 8, wherein, for the blades of the cutter (20) located in the middle, the saw-tooth edges (2211) of the blades comprise a plurality of edge portions (2211a) provided in an "S" shape and connected end to end.

11. The cutter assembly (100) of claim 1, wherein, in a radial direction of the cutter shaft (10), a distance from a farthest end of the cutter (20) located at a lower part to an axis of the cutter shaft (10) is greater than a distance from a farthest end of the cutter (20) located at an upper part to the axis of the cutter shaft (10).

12. The cutter assembly (100) of claim 11, wherein a distance from a farthest end of each group of the cutters (20) to the axis of the cutter shaft (10) gradually decreases from the first end (11) of the cutter shaft (10) to the second end (12) of the cutter shaft (10).

13. The cutter assembly (100) of claim 11, wherein, for blades of the cutter (20) located in a middle:
at least one of the blades is bent downward to form an angle of 0° to 30° with a horizontal plane; and/or
at least two of the blades are bent upward to form an angle of 45° to 80° with the horizontal plane; and/or
at least one of the blades is provided parallel to the horizontal plane.

14. The cutter assembly (100) of claim 1, wherein a number of blades of the cutter (20) located in a middle is greater than a number of blades of the cutters (20) located on both sides thereof, or
a number of blades in each group of the cutters (20) decreases from the first end (11) of the cutter shaft (10) to the second end (12) of the cutter shaft (10).

15. The cutter assembly (100) of claim 14, wherein blades of two adjacent groups of cutters (20) are staggered along a same rotation direction.

16. The cutter assembly (100) of claim 15, wherein angles between the blades of the cutter (20) located in the middle and the blades of the cutters (20) located at both ends along an extension direction of the cutter shaft (10) are 0° to 45°.

17. The cutter assembly (100) of any of claims 1 to 16, wherein, for blades of the cutter (20) located at a lower part, cutting edges of the blades face downward;
for blades of the cutter (20) located in a middle, a cutting edge of at least one of the blades faces upward, and a cutting edge of at least one of the blades faces downward; and
for blades of the cutter (20) located at a lower part, cutting edges of the blades face downward.

18. The cutter assembly (100) of any of claims 1 to 16, wherein, for blades of the cutter (20) located at a bottom:
at least two of the blades are bent upward to form an angle of 0° to 80° with a horizontal plane;
at least two of the blades are provided in sections, wherein each of the blades comprises a first blade portion (2311) and a second blade portion (2321) connected to each other, the first blade portion (2311) is connected to a root of the cutter (20) located at the bottom, and the second blade portion (2321) is suspended;
the first blade portion (2311) is bent downward to form an angle of 60° to 80° with the horizontal plane; and
the second blade portion (2321) is bent upward to form an angle of 0° to 90° with the horizontal plane.

19. The cutter assembly (100) of claim 18, wherein a cutter holder (13) is provided at the first end (11) of the cutter shaft (10), and for the blades of the cutter (20) located at the bottom;
an angle of 25° to 60° is formed between the first blade portion (2311) and a side wall of the cutter holder (13); and
an angle of 45° to 70° is formed between the second blade portion (2321) and the side wall of the cutter holder (13).

20. The cutter assembly (100) of any of claims 1 to 16, wherein, for blades of the cutter (20) located at an upper part, each of the blades is obliquely bent upward to form an angle of 0° to 90° with a horizontal plane; and/or
the preset distance between the two adjacent groups of the cutters (20) is 5 mm to 20 mm.

21. The cutter assembly (100) of claim 1, wherein a number of blades of the cutter (20) located in a middle is four, a number of blades of the cutter (20) located at an upper part is two, and a number of blades of the cutter (20) located at a lower part is two; and/or
the number of blades of the cutter (20) located in the middle is two, the number of blades of the cutter (20) located at the lower part is two or four, and the number of blades of the cutter (20) located at the upper part is two.

22. A cup body assembly (1000), comprising a cup body (200), a cup holder (300) and a cutter assembly (100) of any of claims 1 to 21, wherein the cup body (200) is provided at the cup holder (300), and the cutter assembly (100) is provided at the cup holder (300) and extends into the cup body (200).

23. The cup body assembly (1000) of claim 22, wherein an inner bottom wall of the cup body (200) comprises a horizontal segment (220) and an arc segment (210) provided around the horizontal segment (220).

24. The cup body assembly (1000) of claim 22, wherein an angle of 100° to 145° is formed between a side wall of a cutter holder (13) of the cutter assembly (100) and a tangent surface of the inner bottom wall of the cup body (200).

25. The cup body assembly (1000) of claim 22, wherein a gap between a cutter (20) located at a bottom and a side wall of the cup body (200) at a corresponding position is 2 mm to 10 mm; and a gap between the cutter (20) located at the bottom and the inner bottom wall of the cup body (200) is 2 mm to 10 mm; and/or
a distance between a cutter (20) located at a top and a cup opening of the cup body (200) is 110 mm to 180 mm.

26. A food processor, comprising a holder assembly and a cutter assembly (100) of any of claims 1 to 21 or a cup body assembly (1000) of any of claims 22 to 25,
wherein the cup body assembly (1000) is provided at the holder assembly.
